# EUROPEAN PATENT APPLICATION

(11) **EP 2 015 262 A1**
(43) Date of publication of application: **14.01.2009**
(21) Application number: 07011373.3
(22) Date of filing: 11.06.2007
(51) Int. Cl.: G07F 7/10, G06Q 20/00

(54) **Advance remote payment authority for real and virtual world transactions**

(71) Applicant: Gardner, Richard Mervyn, Chelwood Gate, East Sussex RH17 7LE (GB)
(72) Inventor: Gardner, Richard Mervyn, Chelwood Gate, East Sussex RH17 7LE (GB)

(57) **Abstract**

A payment card system for use in remote transactions wherein a cardholder may create additional accounts subsidiary to a principal payment card, each such account having its own unique payment card number compliant with existing standards and protocols and each credited in advance by transfer from the principal account with a specified amount available either to meet modest or mini payments below a specified level and otherwise only to meet the cost of purchases from specified merchants, whilst disabling the principal payment card from being used in remote transactions, such that a variable payment card account number is used for each transaction, the principal payment card numbers are not at any time at risk, merchants may be certain of payment without possibility of repudiation of the transaction without needing to identify the cardholder, and thereby enabling remote anonymous transactions to take place both in the real world and in a virtual world.

## Description

### FIELD OF THE INVENTION

The demand for remote shopping and commercial facilities has been enabled to a large extent by the innovative ability of payment card systems to keep pace with requirements by means of "Cardholder not present" or "CNP" transactions. However, the use of payment cards by telephone or the internet is not without problems for both the Cardholder and the Merchants involved, and the extent of fraudulent activity is steadily increasing.

The first problem at present is the security of the payment card numbers used over the internet or telephone, where there are dangers of:-
[a] interception of the numbers during transmission by third parties, either directly or as a result of a "phishing" attack, involving respectively the simple interception of payment card numbers or the obtaining of numbers and personal data from a Cardholder by fraudulent means such as posing as a remote merchant authorised to accept card details:
[b] unauthorised recording of the numbers by the remote merchant's staff at the time of the transaction:
[c] subsequent unauthorised retrieval of the numbers from the remote merchant's database, either by the remote merchant's staff or by an external hacker.

Actual payment card numbers thereby obtained may result in either unauthorised CNP use or the replication of a fake card with genuine numbers.

A second and entirely different problem relates to the remote merchant (or financial institution, both hereafter a "Merchant") who, having made an apparently genuine sale and received credit for an authorised transaction, is liable at any time within about 60 days from that transaction to find that the sale proceeds, although already banked through the payment card clearing system, is then charged back to the account thereby reversing the credit, (called by the payment card organisations and hereafter as a "Chargeback").

There are a number of different reasons for a Chargeback, but by far the most common of them is the repudiation of the transaction by the cardholder alleging the unauthorised use of a payment card (representing either fraudulent activity by the actual Cardholder or use of stolen card numbers) against which the Merchant has little defence at present. Hereafter, except as indicated otherwise, repudiation refers only as above to alleged unauthorised sue and not to faulty service or goods.

CNP transactions remain limited to all kinds of shopping and financial transactions carried out by telephone or on the internet, but the requirement for a new type of remote transaction has emerged in relation to transactions to be carried out in a Virtual World.

In payment systems in a Virtual World, the representation of a real person - called here for the purposes of clarity the "Ghost" of that person - would conduct a virtual shopping trip, or complete a virtual financial transaction, with a virtual (or "Ghost") Merchant, which would itself necessarily be the representation of a real Merchant since even a Ghost would presumably baulk at purchasing something from an unidentifiable virtual presence with real money.

The problems of CNP are thus magnified in such a Virtual World, since the requirement for maintaining the anonymity of the Ghost is in direct conflict with the understandable need for the Merchant to know with whom it is dealing so that it may rely upon being paid on completion of the transaction. Moreover, the anonymity of the Ghost may be compromised by the registration in the Virtual World of a delivery address.

### OBJECTIVES OF THE INVENTION

The prime objective of the current invention is therefore to provide an interchangeable system for dealing with CNP transactions in both the real and a Virtual World in a manner that preserves the anonymity of the Cardholder (or the Ghost as Cardholder) whilst enabling the Ghost Merchant to be assured that despite not knowing who the customer is or where they may be contacted that the transaction may be safely completed in the assurance of payment and without fear of repudiation by the customer, whoever it is.

The means of achieving this objective also provides a solution to the other main problem of existing CNP transactions by telephone or internet - security of card numbers - thereby providing an integrated secure system for both CNP transactions and for the first time transactions in a Virtual World and encompassing security of card numbers and non repudiation of transactions whilst preserving the anonymity of the customer, as required in a Virtual World but also hereby becoming available for the first time in the real world.

The anonymity of the customer may be welcome in the real world as well as being essential in a Virtual World, thereby preventing for example any pressure being applied from a Merchant for follow-up sales merely because of one injudicious or regretted previous purchase, and certainly preventing the sale of Cardholder details for online or direct mail prospecting.

### SUMMARY OF THE INVENTION

The invention is as defined in the Claims

### DESCRIPTION OF THE PRESENT INVENTION

The present invention is described in relation to:
A "Main Card", being a Credit of Debit card which is conventional in all respects except that it cannot be used for CNP transactions
a "Virtual Card", being the single use variable number virtual payment system card derived from and ancillary to the Main Card, and the subject of the present invention
a "Cardholder", being the holder of the Main and Virtual Card
a "Ghost", being the persona of the Cardholder in a Virtual World
an "Issuer", being the bank or other company issuing the Card
an "Issuers Cardsite", being the facility of the Issuer either online or in a Virtual World
a "Merchant", being a vendor of goods or services in the real world
a "Ghost Merchant", being a vendor of goods and services in a Virtual World, normally but not exclusively as a representation of a Merchant
the "Clearer" being the Merchant Clearing bank who processes the Card transactions of the Merchant or Ghost Merchant
a "Virtual World" being a non physical online world exemplified by but not limited to Second Life in which Ghosts are free to move and relate to each other on an anonymous basis without physical restraints
"CNP transactions", being internet or telephone transactions with a Merchant
"Virtual Transactions", being those carried out by a Ghost in a Virtual World with a Ghost Merchant
"Remote Transactions" including both CNP and Virtual Transactions

The present invention is for a system and method of creating a single use Virtual Card account, which is credited at the request of the Cardholder with an approved specified sum by debit from a conventional payment card (the "Main Card"), such sum to be paid only to a specified Merchant, with such Virtual Card then being used for a Remote Transaction for payment of that specified amount to that specified Merchant.

The Virtual Card would be dependant upon and subsidiary to the Main Card, which could be either a Credit card or a Debit card and the sums available for transfer to the Virtual card would depend upon the credit or funds available to the Main Card.

Although conventional in most ways and fully effective and protected by Chip & PIN in the physical world, the Main Card would be distinguished from other conventional payment cards by not being useable at all in Remote Transactions.

The Virtual Card would generate for each occasion of use a different Card number, related to both the Main Card numbers and those related to the selected Merchant, and funds would be transferred from the Main Card to the Virtual Card account, for payment of the selected sum only to the identified Merchant except for a return to the Main Card by cancellation, or a modest float for minor payments as described below.

The use by the Cardholder of such a Virtual Card for a Remote Transaction would mean that any attempted subsequent repudiation of the transaction by the Cardholder would be refused (or at least subject to significantly more stringent checks than at present).

Although a transaction undertaken by a Ghost would seem to be with a Ghost Merchant, and certainly the shopping experience would be with a Ghost Merchant, the actual payment details would normally relate to the real Merchant behind the Ghost since most transactions could not take place without the certainty that the order had been placed with the selected actual Merchant, following which the risk is no more than would be the case in dealing with the same Merchant in a conventional CNP transaction.

There would however be certain occasions when a truly ghostly transaction - by a Ghost with a Ghost merchant with no known Merchant identified - might take place or even be preferable, and these would basically be transactions for modest or trivial sums where the Ghost takes the risk of non fulfilment of the order in exchange for the benefit of receipt of goods or services whilst remaining unidentified. Thus, the risk of not receiving goods paid for would not be great in any event, could be evaluated by conventional user-experience marking systems and would be more than matched by not putting the Main Card numbers at risk. A modest balance could therefore remain credited to the Virtual Card for such ghostly purchases without the need for any further authorisation at all.

The present invention also enables goods and services to be ordered in a Virtual World and delivered in the real world without the need to identify the Ghost purchaser of those goods or services, since a delivery address would have been registered by the Cardholder with the Card Issuer and this would be communicated by the Card Issuer to the Merchant at the time of authorising the transaction.

This address would not normally be the address of the Cardholder but might be conveniently close to the Cardholder's home or office: in the United Kingdom, a convenient and local delivery point could be a Post office (already used to goods acceptance and delivery), or any other local shop, Hotel or Public House, and other countries would certainly have similar types of networks which could be used as delivery/collection points (the "delivery point").

Alternatively, the local office of an international carrier might be chosen, not necessarily being on the same continent, provided further secure arrangements were made for onward transmission at the Cardholder's direction: in other words, actual delivery could be to the Cardholder's home or office, via the local delivery point and on forwarding further instructions plus ID Code to the delivery point. The personnel at the delivery point would not be able to co-relate the physical person to the Ghost who ordered the goods as there would be no connection.

The present invention also means that the use of a Debit Card for remote transactions is for the first time both
[a] as safe as the use of a Credit Card (the amount at risk is limited to the amount credited to the Virtual Card rather than as at present with a Debit Card being limited only by the amount of funds in a bank account)
and [b] results in the same customer protections as are available to a Credit card user (in the United Kingdom the protection offered by the Consumer Credit Act).

The present invention is therefore of a system and method whereby a customer may effectively use his or her Main Card in a Remote Transaction without any concern whatsoever regarding the safety of personal details and Main Card numbers since because of the use of the ancillary Virtual Card, no such details or numbers are necessary except within a real life link (taken to be a secure one) between the Cardholder or Ghost to the Issuer itself. Thus, the Remote Transaction is authorised by an Advanced Remote Payment Authority (hereafter an "ARPA"), and therefore the actual Main Card numbers are safe from:-
[a] interception during transmission (they are not transmitted)
[b] fraudulent application by staff at the remote location during the transaction since the numbers used are for limited use only and specifically for a payment from the Card Issuer to the particular identified remote Merchant so that diversion of funds or re-use of the numbers is not possible
[c] fraudulent application after the transaction since
either [i] in single payment cases, there is no database of card numbers
   or [ii] in the case of a regular payment authority, the numbers retained can only be used for a payment from a specified Card Issuer account to the credit of a specified remote Merchant
and in any event the Main Card numbers are not useable for Remote Transactions.

Moreover the use of an ARPA means that the cardholder is not able subsequently to repudiate the transaction except for reasons of non delivery or defect in goods or services, thus greatly reducing Chargeback to Merchants.

As far as the remote Merchant is concerned, it can be certain that payment will be forthcoming because of the ARPA, without requiring any actual payment card numbers or indeed any name or other details of the customer, including delivery address. Thus, the Merchant need not concern itself with the usual checks necessary for CNP transactions - if the ARPA is received, it can be presented for verification in real time (similar to conventional authorisation) and if so verified will be honoured on subsequent "banking" of the transaction with its Clearer as usual but without any possible Chargeback except for non-delivery, or faulty merchandise or services. In this case the "authorisation" of the transaction by the Clearer means just that, and not that the transaction has not failed yet, which is all that it means at present.

In the case of CNP transactions, the Cardholders actual address could be given, over-riding the automated delivery address, since preserving anonymity would be an option in the real world rather than a requirement.

Thus, despite widespread criminal activity on the internet and generally in respect of CNP transactions, it will be possible for the first time to make purchases from an unknown remote Merchant secure in the knowledge that the most that could be lost is the amount agreed to be paid: in other words, whilst the amount believed to have been spent legitimately could be lost through fraud (initially at least, possibly recovered later) the risk is limited to that sum and does not extend to the whole balance on the account (Debit card) or balance of available credit (Credit Card).

This analysis takes no account of the very effective secondary line of defence of payment cards, involving spending patterns and other checks, but the risk of loss and inconvenience for all parties is a real and increasing one. In other words, buying the goods or services from a particular Merchant may not itself be wise, but the use of the Virtual Card to obtain an ARPA precisely limits that risk.

The present invention is described in relation to a Cardholder with a Main Card (Credit or Debit) issued by a Card Issuer with a conventional 16 digit MOD10 compliant Card number, and a remote Merchant or Ghost Merchant, being a site selling goods or services by remote means for which it habitually accepts payment cards, which are first authorised in the usual manner and then "banked", both through its Clearer.

In a conventional CNP transaction, the following steps would be normal, after initial registration and card issue:-
[a] Cardholder decides upon a CNP purchase from a remote Merchant
[b] Cardholder completes purchase order (online or over the telephone)
[c] Cardholder enters Card Number, Start & Expiration Date, precise name and perhaps the CVV (3 digit value on reverse of a Card)
all based upon and involving the correct identification of the Cardholder and full details of the Main Card.

These details would be given over the telephone or entered and sent online: telephone conversations are totally insecure whilst an online link is usually (although not necessarily) secure, but the Cardholder is not able to absolutely confirm this and has to trust the Merchant's assertion on the matter.

Whether sent in an encrypted form or not, the remote Merchant has to retrieve the plaintext numbers and store them (at least temporarily) whilst details are sent by secure link to the Clearer for an authorisation Code (possibly with an intermediate secure reference by the Clearer to the Issuer).

The authorisation Code, if received, enables the remote Merchant to proceed with some certainty of being paid initially, this being accomplished by "banking" the transaction in due course (overnight, or the following day). However, the sale is not finally complete until some 60 days later when the possibility of a Chargeback is finally removed.

The present invention provides for a very different regime, although accomplished within the existing payment card clearing procedures. The steps envisaged are set out below, subsequent to conventional Main Card issue followed by the issue of an ARPA number and the download of a simple program from the Issuer.

The ARPA number will be in conventional 16 digit Credit card format, with the initial 6 digits identifying the Issuer and the fact that the number relates to an ARPA: thus, without any other information this initial Bank Identification Number (BIN) part of the Card number will distinguish an ARPA transaction from a conventional payment card transaction for that Issuing bank, bearing in mind that the full Main Card number may not be used at all in a CNP transaction.

The steps necessary using the present invention are described in relation to a specific purchase by a Cardholder from a remote Merchant for a predetermined sum would be:-
[a] Cardholder identifies item for purchase and notes either
   the ARPA number of the Merchant (for illustration and not by way of limitation, of 10 digits)
   or the precise Merchant payment name, which is converted using a standardised algorithm on the programme to a similar 10 digit number
   This number is called hereafter "M", and is entered into the Cardholder's desktop (or on-line) programme
[b] the Cardholder's programme then combines the value "M" with the cardholders own Card Number hereafter "C", creating a 9 digit "C+M" by MOD10special addition
   The description MOD10special here relates to the sum of or difference between any two linear vertical digits from 0 to 9 being:-
   if sum< 0, sum + 10
   if 0 > sum > 10, sum
   if sum >10, sum - 10
   resulting always therefore in a digit in the range 0 to 9.
   The MOD10special is to be distinguished from the MOD10 as applied to payment card numbers, which has a special meaning to show that the number used is prima facie a valid card number
[c] the Cardholder then logs on to the Issuer's on-line site and identifies him or her self either with actual Main Card numbers or by any other means of authentication (possibly not necessarily over a secure link) followed by the "C+M" value, together with details of the purchase including the Merchant name and a specified sum or maximum amount
[d] the Issuer's Cardsite would then generate a 9 digit Random number "R", adding this to a temporary Sort database linking the use of the R to the particular Cardholder's account:
[e] the Issuer's Cardsite would then
   [i] retrieve the value "M" from the value received of "C+M" (by deducting "C" (known by the Issuer's Cardsite) on a MOD10special basis)
   [ii] add MOD10special the value "R" to "M" retrieved and sending "R+M" back to the Cardholder
[f] the value "R" would then be retrieved by the Cardholder by deducting "M" MOD10special
[g] finally the Cardholder would add the value "C" to "R" to make the final 9 digit value "C+R" which would then form the 7^{th} to 15^{th} digits of the 16 digit ARPA so that:
   [i] the first 6 digits would be the fixed BIN
   [ii] the 7^{th} to 15^{th} digits would be "C+R"
   [iii] the 16^{th} digit would then be adjusted to the value necessary to make it MOD10 card system compliant
[g] the Cardholder would then send this ARPA value
   "BIN + C+M + MOD10 digit"
   to the Merchant or Ghost merchant for the purchase of goods or services, the ARPA then being treated in conventional payment card manner with the transaction being "banked" with the Clearer as usual, except that :-
   [i] real time authorisation would be essential to ascertain if the ARPA number were genuine (via the Clearer to the Issuer and back) - as in all Remote Transactions, no goods or services would be delivered or supplied until the ARPA had been confirmed by an authorisation code
   [ii] other details of the Cardholder or the card itself (expiration, CVV etc) might be required or the need for them could be overridden by the ARPA authorisation

Subsequent to authorisation of the ARPA, the order could be fulfilled since the transaction could not be repudiated by the Cardholder and would not result in a Chargeback to the Merchant except for some product or delivery fault.

The use of the Main Card numbers over an insecure network as cardholder identification to the payment card issuer would be acceptable since the numbers could not be used for any CNP or Virtual Transaction but instinctively it seems better to avoid this, and the alternatives are:-
[a] use of a secure link - relatively simple and readily available
[b] use of a variable sequential integrated identification and authentication code to resist targeted interception and avoiding the use of the Main card numbers at all
[c] except for the first time of virtual card use (when other arrangements would have to be made), the identification could be the use of the virtual payment card number used on the preceding occasion of use

The present invention allows for various alternative means of implementation, all with the essentials outlined above, but related to different starting points:-
[a] from a Home computer, with the system programme loaded, with:-
   [i] implementation module with direct means of authentication to the Issuer Cardsite together with a Fixed PIN or equivalent to ensure personal use only
   [ii] space for noting the ARPA number of registered Merchant
   [iii] algorithm for ARPA-equivalent number production if not
   [iv] link details with the Issuer
   [v] algorithm to compute, send and receive the respective Codes as above
[b] from a computer other than the "Home" computer, by access to the Issuer Cardsite via the internet followed by the same procedures as outlined at [a] using an online format, first preceded by identification either by
   [i] Main Card with a Fixed or Variable PIN
   or [ii] integrated sequential identification and authentication

The Variable PIN as a means of authentication is available in the manner described in GB2345175 and the integrated sequential identification and authentication code is available as described in GB2387999, both by the present inventor.

Three different regimes are proposed by the present invention:
[a] the provision of an ARPA for a Remote Transaction specifying the Merchant and single amount
[b] the provision of an ARPA covering a series of payments to a specified Merchant for specified amounts over a specified period (open commitments would not be possible since the whole envisaged sum would have to remain transferred to the Virtual Card account).
[c] the provision of an anonymous payment to an identified or anonymous Merchant for a modest sum within the limit of the amount credited to the Virtual Card account but without an ARPA.

In a principal embodiment, the present invention provide for a payment card system for use in remote transactions wherein a temporary card account dependant upon and subsidiary to a principal payment card is created at the request of a cardholder and credited by the transfer from the principal payment card of specified sums, each such temporary card account having its own unique payment card number compliant with payment card numbering standards.

In an additional embodiment, the present invention provides for the temporary card account to be used to make payments in excess of a specified sum only to a payee specified at the time of its creation.

In a further embodiment, the present invention provides that the cardholder is not identified in any transaction and remains anonymous throughout.

In a further embodiment, the present invention provides for a part of the unique payment account number to be a random value ascribed by the card issuer on each occasion of use.

The present invention therefore makes possible three major advances in security and flexibility: firstly there would be an increase in security for the Cardholder for Remote Transactions, in that Main Card numbers would not be at risk: secondly, the ability to use a payment card in a Virtual World or anonymously in the real world is for the first time made possible: and thirdly there would be a reduction in costs for the Merchant since fraudulent card use and repudiation by the cardholder are both eliminated as potential reasons for Chargeback. In addition, the Main Card issuers will also directly benefit from a reduction in card fraud, as it is they who have to bear the costs of dealing with fraud, in the first instance at least.

The concept of a single use payment card number is not new in itself, and several patents have been granted and applied for in respect of such systems, but the present invention is distinguishable from them and represents an inventive step which is not obvious from those patents specified or otherwise to a person skilled in the art.

The first such difference is that the payment card number in the present invention represents a virtual rather than a single use number: an application for a repeat virtual number by the cardholder for a transaction with a merchant used before would result in the same number as was used previously with that merchant, but unless the ARPA had been properly requested and authorised as set out hereunder, there would be no virtual account set up and no funds to meet any demand.

The second difference relates to the means of providing the single use or virtual payment card number: the systems as referenced below refer to a single use payment card number, which is variously generated, issued to, sent to or provided to a cardholder - in other words it just mysteriously appears - whereas in the present invention the computation of the virtual payment card number is made separately by the cardholder and the payment card issuer along precise predetermined lines. It is thus possible to say that such a number could (as above) be used again but since the manner of computation of the number for other systems is unknown, it is not possible to say the same for other systems

In addition, it is a preferred embodiment of the present invention that the system allows for complete anonymity of the cardholder, thereby enabling its use in a virtual transaction in a virtual world, but this would not be possible for the other inventions, based as they are upon a standard payment card with full and verifiable payment card details (name, Expiry Date, Start Date, CVV) being required as usual apart from the single use number.

| **Patent No** | **Inventor** | **computation of virtual payment card number** | **anonymity for a virtual world** |
|---|---|---|---|
| 1 US 5,883,819 | Franklin | proxy number issued | no |
| 2 US 5,984,180 | Albrecht | no details as to virtual number at all | *no* |
| 3 WO 00/43943 | Armetta | issuing a satellite card..number | not clear but probably not |
| 4 WO00/49586 | Flitcroft | sending or using a limited use number | no |
| 5 WO 01/065502 | Brody | anonymous card number generator | no (anonymity refers to number, not cardholder) |
| 6 WO 01/69556 | Hogan | pseudo number and cryptography | no |
| 7 WO 02/05165 | Suh | temporary credit card number..issued | no |
| 8 EP 1077 436 | Pineli | single use payment..instrument provided | No |
| The present invention | | card No + merchant name + random | Yes |

### BRIEF DESCRIPTION OF THE DRAWINGS

**Fig. 1** Elements of payment card systems
**Fig. 2** Authorisation of payment card transaction
**Fig. 3** Website claiming credit from payment card
**Fig. 4** Advances Remote Payment Authority system - general description
**Fig. 5** Advances Remote Payment Authority system - illustrative Code values

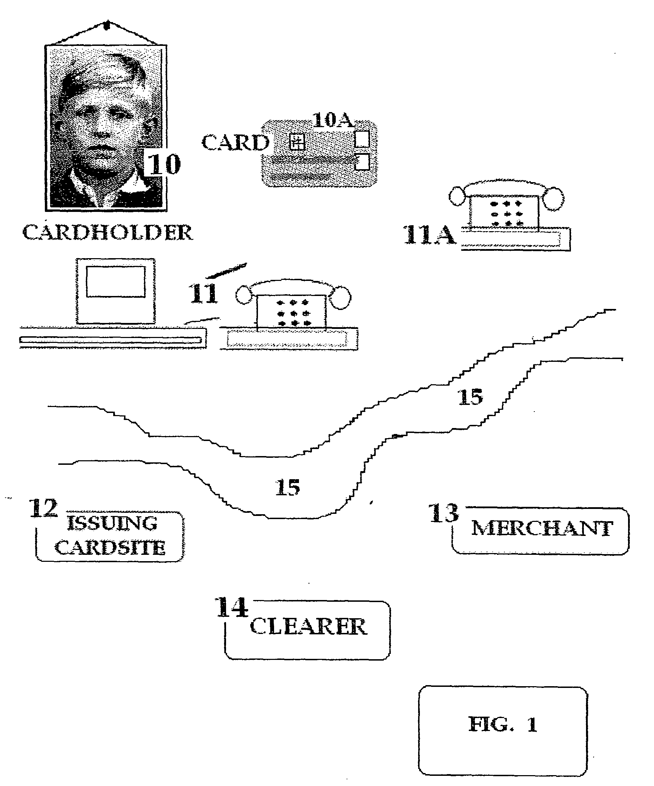

**Fig.1** shows the elements involved in a remote Cardholder-not-present payment card transaction, being a Cardholder 10 with a payment Card 10A, the Cardholder 10 being linked by a Computer 11 linked via an insecure link over the internet 15 to a Merchant 13 website which maintains payment card clearing facilities via a Merchant Clearing Bank 14. The bank which has issued the Card 10 maintains a linked or online facility called the Issuing Cardsite 12.

The principal embodiment of the present invention is in relation to a purchase of goods or services using a personal Computer 11 from a Merchant 13 over the Internet 15, although the system encompasses variations where a computer other than the Cardholder 10's own computer were used (such as an associated office location or an Internet Café), or by telephone (all denoted by a separate link 11A) to a Merchant 13, requiring in each case the availability of a programme able to compute the necessary Codes.

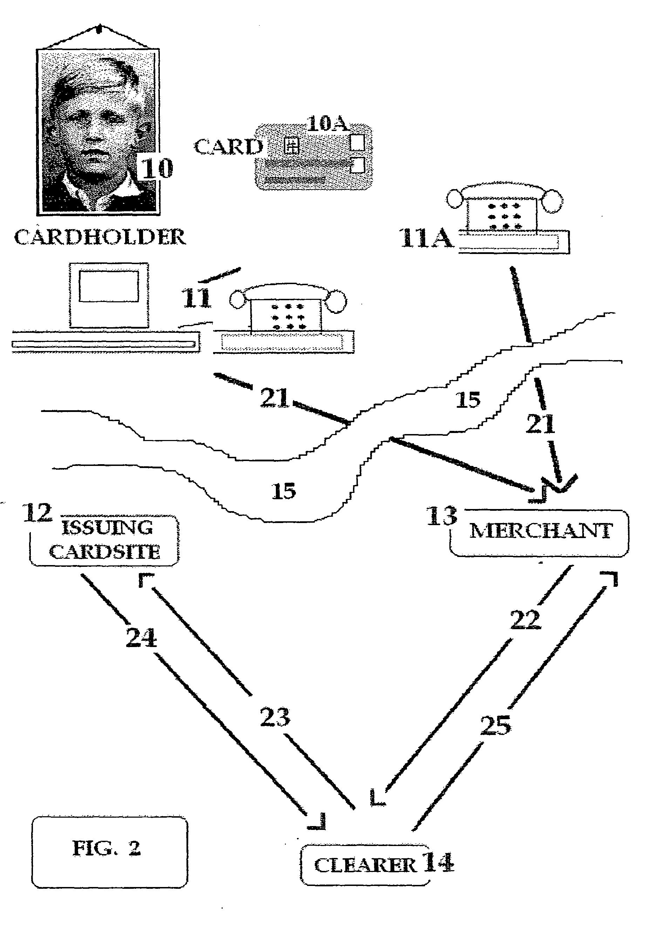

**Fig. 2** shows the structure for a conventional CNP payment card authorisation, whereby the Cardholder 10 sends details 21 of the Card 10A together with details of the proposed order to the Merchant 13, following which the Merchant 13 sends details to the Merchant Clearing Bank 14 for authorisation, which might be given directly 25, or may require a further request for authorisation by the Clearer 14 to the Issuing Cardsite 12.

Assuming that the proposed transaction is within the relevant limits and causes no system alarms, then the Cardsite 12 gives an authorisation Code 24 to the Clearer 14 which then passes on the authorisation Code 25 to the website.

Whether or not the authorisation Code 25 may be given by the Clearer 14 or whether the transaction has to be passed on to the Cardsite 12 for clearance depends upon several factors, some being of a proprietary nature related to the particular Card Issuers systems, but include the amount and location of the transaction, the rating of the Merchant 14 and of the Cardholder 10. If no reference is made to the Cardsite 12, then no check is possible as to whether or not the transaction is within the credit limit on the Cardholder 10's account, so that most CNP transactions other than for a small amount are authorised by the Cardsite 12.

The authorisation of the transaction is not the same thing as approval for payment, which is provisional after the transaction is banked until the time allowed for Chargeback has elapsed.

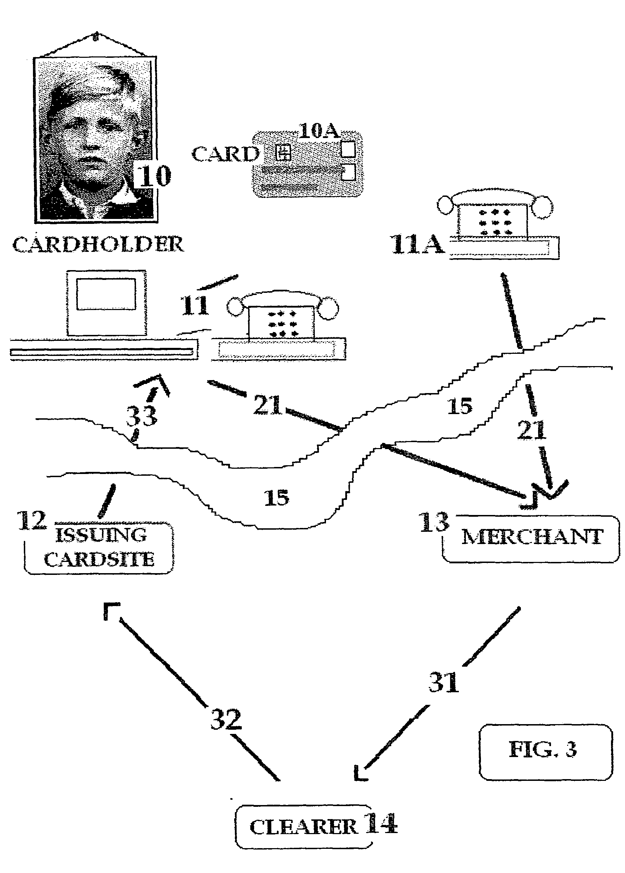

**Fig. 3** shows the banking of the transaction whereby the Merchant 13 requests a credit to its account with the Clearer 14 by "paying in" 31 the transaction record details (as though it were a cheque), following which the Clearer 14 then reclaims 32 this amount from the Cardsite 12. To complete the circle, the Cardsite 12 then claims the amount 33 from the Cardholder 10 by including it on the monthly account (Credit card systems) or debiting the account directly (Debit Card systems).

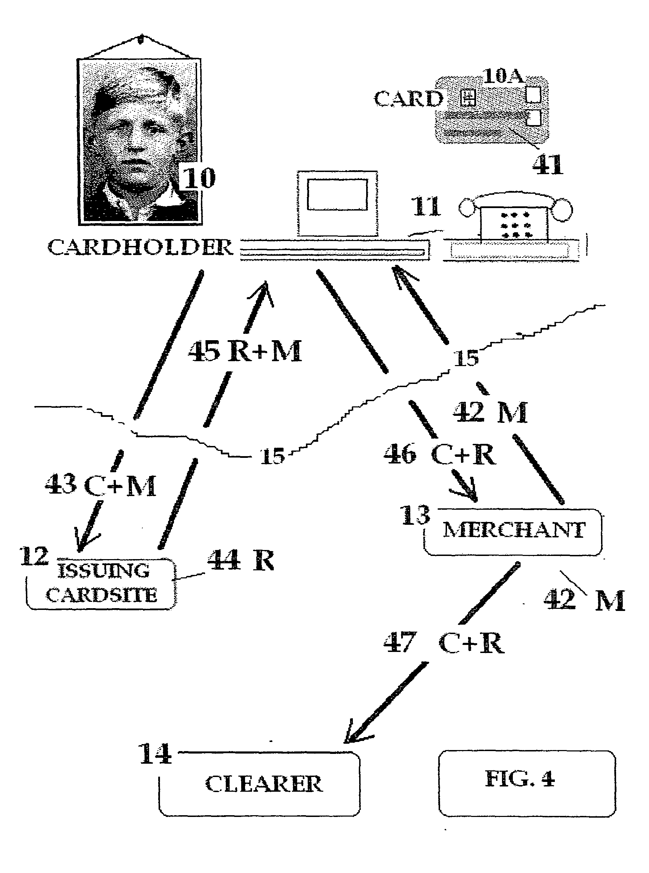

**Fig.4** shows the main embodiment of the present invention, wherein the Cardholder 10 ascertains the ARPA Code Number M (42) from the Merchant 13 in respect of a purchase (of goods or services), following which the Computer 11 computes Code 43 (an amalgam of the Website Code M (42) and the Cardholder's own ARPA No. C (41)) which is sent 43 with appropriate identification to the Cardsite 12 together with details of the purchase for approval.
The Cardsite 12 is then able to carry out the following tasks:-
[a] verifies that the proposed transaction is within available credit limits
[b] separates the Merchant ARPA value M 42 from the Code received C+M43
[c] generates a random value R 44
[d] computes the return Code R+M 45, being the amalgam of Code M 41 and R 44
On receipt of the Code R+M 45, the Computer 11 then
[e] computes the actual Code 46 being C+R after adjusting the last digit to comply with the conventional MOD 10 card number check algorithm
[f] creates a special temporary payment card account with this ARPA number C+R 46 which is credited with the amount of the transaction and any associated costs
[g] uses this temporary ARPA Card number 46 to complete the purchase.
Thereafter, the Merchant 13 then "banks" 47 this transaction in the usual manner, analogous to step 31 on Fig 3 followed by the identical steps of claim from the Cardsite 32 and ultimate claim from the Cardholder 33, with the exception only that the amount of the transaction is claimed from the ARPA account and not from the underlying Card account 10A
The system is therefore precisely the same as for ordinary card numbers as far as the Merchant 13 is concerned except that given an ARPA number the Merchant knows that the transaction can not be repudiated by the Cardholder 10 and in that respect the dangers of Chargeback are greatly reduced.

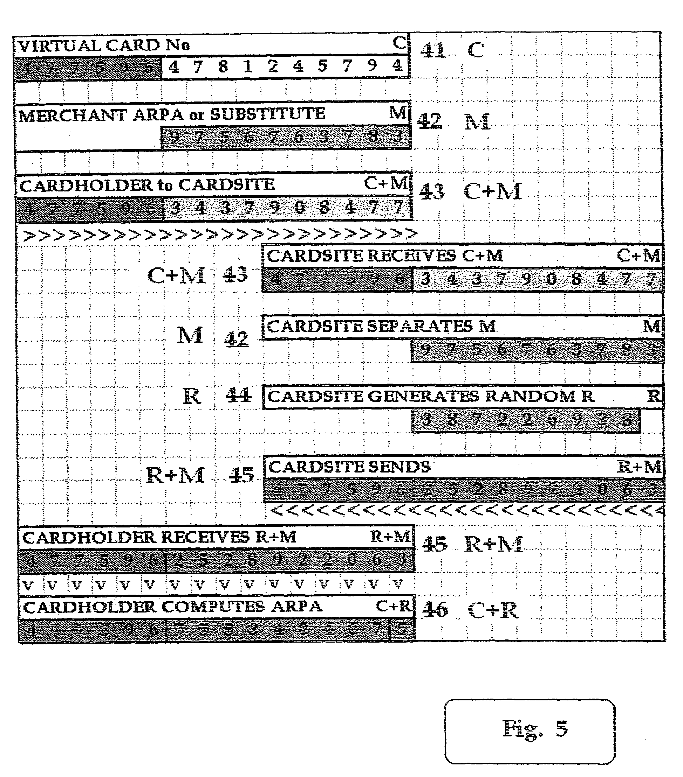

**Fig. 5** shows a decimal illustration of the principles involved, whereby the ARPA Number 41 C is amalgamated with the Merchant ARPA Number 42 M to form Code C+M 43, then sent to the Cardsite 12. After deducting the Merchant Code M 42 and adding a Random R 44, the new value R+M 45 is then returned to the Cardholder 10, from which both the Cardholder 10's Computer 11 and the Cardsite 12 compute the actual temporary Card number at C+R 46 (both of course being the same).

The actual algorithm used for the computations of Codes (described as an amalgam, or by the words "add" or "deduct") are not regarded as a part of the present invention, which is intended to cover method and to be inclusive of all such methods, since the system does not rely upon the algorithms being secret.

## Claims

1. A payment card system comprising:
[a] the issue of a conventional main payment card with a fixed payment card number to a registered cardholder
[b] the issue to the cardholder of a virtual payment card, related and complementary to the main payment card, consisting of a programme for computing variable payment card numbers which are a function of the main payment card number and other variable data, such programme to be installed on the system user's computer
[c] the selection by the cardholder of an intended transaction, merchant and transaction amount in a cardholder not present transaction
[d] the identification of the cardholder to the main payment card issuer
[e] the sending to the main payment card issuer of details of an intended transaction including the transaction amount and a number derived from the main payment card number amalgamated with a number allotted to and derived from the name of the merchant in a predetermined standard format
[f] the verification by the payment card issuer of the main payment card number and the name of the merchant
[g] the authorisation of the transaction as being within the credit available to the cardholder by debit to the main payment card account
[h] the notification by the payment card issuer to the cardholder of the authorisation of the intended transaction accompanied by a random number generated for the purpose
[i] the amalgamation by the cardholder of the main payment card number and the random notified at [h] to form a virtual payment card number, followed by such modification to the last digit of the virtual payment card number as is required to ensure conformity with any protocols for payment card numbering then in force
[j] similarly the amalgamation by the payment card issuer of the main payment card number and the random generated at [h] to form a virtual payment card number, followed by such modification to the last digit of the virtual payment card number as is required to ensure conformity with any protocols for payment card numbering then in force
[k] the debit to the main payment card account of the transaction amount and the corresponding credit to such modified virtual payment card number account
[1] the use by the cardholder of such modified virtual payment card number in a cardholder not present transaction with the selected merchant and for the amount specified
[m] the use of the received modified virtual payment card number by the merchant in a payment card transaction which is indistinguishable from any other payment card transaction as far as the merchant is concerned, including the use of the data relating to the main card such as the cardholder's name, the Start and Expiry Date and the CVV
[n] the closure of the modified virtual payment card account by debit of the transaction amount in settlement of the claim from the merchant.

2. The system of Claim 1 wherein the main payment card cannot be used for cardholder not present transactions at all.

3. The system of Claim 1 wherein the name, expiry date and other data submitted by the cardholder to a merchant are not verified by the payment card issuer and are entirely fictitious, thereby enabling an entirely anonymous transaction.

4. The system of Claim 2 wherein the name, expiry date and other data submitted by the cardholder to a merchant are not verified by the payment card issuer and are entirely fictitious, thereby enabling an entirely anonymous transaction.

5. The system of Claim 1 wherein the identification of the cardholder to the payment card issuer at step [d] is for the second and subsequent uses of the system by means of the modified virtual payment card number used for the preceding transaction.

6. The system of Claim 2 wherein the identification of the cardholder to the payment card issuer at step [d] is for the second and subsequent uses of the system by means of the modified virtual payment card number used for the preceding transaction.

7. The system of Claim 3 wherein the identification of the cardholder to the payment card issuer at step [d] is for the second and subsequent uses of the system by means of the modified virtual payment card number used for the preceding transaction.

8. The system of Claim 4 wherein the identification of the cardholder to the payment card issuer at step [d] is for the second and subsequent uses of the system by means of the modified virtual payment card number used for the preceding transaction.
